Europäisches Patentamt

(19) European Patent Office

Office européen des brevets

(11) Numéro de publication: **0 063 556**
**A1**

## (12) DEMANDE DE BREVET EUROPEEN

(21) Numéro de dépôt: **82870018.7**

(22) Date de dépôt: **07.04.82**

(51) Int. Cl.³: **H 05 B 6/14**
**B 26 F 3/08**

(30) Priorité: **08.04.81 FR 8107090**

(43) Date de publication de la demande:
**27.10.82 Bulletin 82/43**

(84) Etats contractants désignés:
**BE CH DE GB IT LI NL**

(71) Demandeur: **MASSER S.A.**
**104, rue de Birmingham**
**B-1070 Bruxelles(BE)**

(72) Inventeur:
**L'inventeur a renonce a sa designation**

(74) Mandataire: **Plucker, Guy et al,**
**OFFICE KIRKPATRICK 4 Square de Meeûs**
**B-1040 Bruxelles(BE)**

(54) **Dispositif porte-outil chauffant à induction.**

(57) Le dispositif porte-outil comprend un noyau porte-outil (1) entouré d'une bague (4) en matériau ferromagnétique et une bobine (5) entourant cette bague (4). Si la bobine (5) est alimentée en courant alternatif, des courants sont induits dans la bague (4) et provoquent son échauffement jusqu'à la température de Curie, le noyau porte-outil (1) s'échauffant par conduction thermique.

Le dispositif porte-outil est utilisé pour le découpage, matriçage, poinçonnage, soudage, etc. de matières thermoplastiques.

EP 0 063 556 A1

./...

La présente invention concerne un dispositif porte-outil chauffé à l'aide d'une bobine d'induction raccordée à une source de courant alternatif, le dispositif porte-outil chauffant convenant particulièrement pour des opérations où un débit de chaleur relativement élevé est requis.

L'utilisation pour de petits travaux de chauffe d'outils chauffants fonctionnant sur le principe de l'échauffement par résistance électrique est largement connue. L'échauffement de ce type d'outil est basé sur le phénomène de conduction thermique entre une résistance électrique chauffée par un courant électrique et la partie opérante de l'outil. La puissance de chauffe de ce type d'outil est donc limitée à des valeurs assez faibles dépendant de l'échauffement admissible pour les éléments constitutifs de l'outil (résistance, fils conducteurs, manche, etc.). En effet, la température à laquelle se trouve la résistance chauffée se communique dans l'ensemble de l'outil, par conduction thermique. En pratique, on ne peut généralement pas dépasser des puissances de chauffe de l'ordre de 300-350 W, ce qui impose un rythme de travail lent, pour que la déperdition calorifique de l'outil soit toujours inférieure ou égale à la puissance de chauffe disponible. Un tel type d'outil convient pour de petits travaux de brasage à l'étain ou autres travaux pour lesquels un faible débit de chaleur suffit. Il ne convient par contre pas pour des travaux de brasage plus importants ni pour des travaux de découpage, soudage, etc. de matières thermoplastiques devant être effectués à grande vitesse.

L'utilisation d'outils chauffés au gaz est également connue. De tels outils peuvent présenter des puissances de chauffe considérables et sont donc tout indiqués pour l'exécution de gros travaux de brasage à l'étain et au plomb.

Pour des raisons de sécurité, ils ne conviennent cependant pas pour des travaux à effectuer sur les matières inflammables, comme les matières thermoplastiques par exemple.

Le principe de l'induction magnétique est largement utilisé pour le chauffage dans les fours à induction et pour les trempes superficielles de pièces métalliques. Ce principe n'a cependant jamais été appliqué à des outils chauffants.

Il s'avère que certains travaux de découpage, soudage, poinçonnage, etc. de matières thermoplastiques seraient idéalement réalisés à l'aide d'un outil chauffant présentant d'une part la sécurité d'emploi des fers à souder électriques, et d'autre part une puissance de chauffe comparable à celle des outils chauffés au gaz.

La présente invention a pour but de remédier aux inconvénients précités en réalisant un outil chauffé électriquement de puissance nettement supérieure à celle des outils connus. Par l'application des techniques du chauffage par induction à un outil léger et maniable, le dispositif porte-outil chauffant conforme à l'invention allie trois avantages essentiels qui ne se retrouvent ensemble dans aucun outil connu, à savoir, en premier lieu une facilité et une sécurité d'emploi que seul peut conférer un outil électrique, en second lieu une puissance de chauffe comparable à celle des outils chauffés au gaz, et en troisième lieu une auto-régulation de la température même en cas d'utilisation discontinue.

La présente invention a pour objet un dispositif porte-outil chauffant, alimenté en courant alternatif, fournissant une puissance de chauffe élevée et disposant d'une auto-régulation de la température.

Le dispositif porte-outil suivant l'invention comprend un noyau porte-outil dont au moins une partie est enserrée dans une bague en matériau ferromagnétique, une bobine d'induction entourant la dite bague, des moyens assurant la connexion des extrémités de la bobine d'induction à une source d'alimentation en courant alternatif et un manche renfermant les éléments précités en laissant toutefois dépasser une partie du noyau porte-outil se prolongeant au-delà de la bague qui l'entoure. La dite bobine d'induction est apte, lorsqu'elle est reliée à une source de courant alternatif, à induire dans la bague en matériau ferromagnétique des courants de Foucault qui provoquent l'échauffement rapide de la bague jusqu'à la température de Curie du matériau dont la bague est formée, une auto-régulation de la température s'établissant autour de cette température ; la chaleur induite dans la bague est transmise au noyau porte-outil par conduction thermique. Il faut noter que la température à laquelle l'auto-régulation s'établit peut être fixée en choisissant judicieusement le matériau dont est constituée la bague parmi les matériaux ferromagnétiques.

De manière plus particulière, les spires de la bobine d'induction sont constituées par un tube en un matériau bon conducteur de l'électricité; ce matériau peut avantageusement être du cuivre électrolytique. Les extrémités de la bobine sont raccordées à des tuyaux aptes à assurer la circulation d'un liquide de refroidissement au travers du dit tube constituant la bobine.

Suivant une forme avantageuse de l'invention, la bague entourant le noyau porte-outil sur au moins une partie de sa longueur est réalisée en acier au carbone, le noyau porte-outil étant quant à lui réalisé en cuivre et se prolongeant au-delà de la bague qui l'entoure en formant à cet endroit la partie opérante de l'outil.

Selon une forme particulière de réalisation, la partie du noyau porte-outil se prolongeant au-delà de la bague constitue directement l'outil proprement dit.

Selon une autre forme de réalisation, la partie du noyau porte-outil se prolongeant au-delà de la bague comporte des dispositifs permettant la fixation d'un outil tel que panne, poinçon, couteau, etc. Les dispositifs de fixation peuvent dans ce cas consister en une rainure longitudinale réalisée dans le noyau porte-outil permettant l'insertion de l'outil dans cette fente et en trous taraudés dans le noyau porte-outil permettant l'immobilisation de l'outil par vis.

Selon un mode de réalisation avantageux de l'invention, les tuyaux constituant le circuit d'alimentation en eau de refroidissement de la bobine d'induction sont réalisés en une matière souple et électriquement isolante.

L'ensemble des éléments faisant partie du dispositif porte-outil est entouré d'un manche réalisé en une matière électriquement isolante, les divers éléments que comprend le dispositif porte-outil étant scellés en leurs places respectives à l'aide d'une matière réfractaire thermiquement et électriquement isolante.

D'autres caractéristiques et avantages de l'invention ressortiront de la description, donnée à titre d'exemple non limitatif, d'une forme de réalisation particulière de l'invention, référence étant faite au dessin annexé représentant une coupe longitudinale d'un dispositif porte-outil chauffant suivant l'invention.

Ce dispositif porte-outil chauffant comprend un noyau porte-outil 1 en cuivre de forme cylindrique, dont une extrémité 2, destinée à porter un outil, est munie d'une rainure longitudinale 11 et de trous taraudés 12 permettant la fixation de l'outil par vis.

L'autre extrémité cylindrique 3 du noyau porte-outil 1 est enserrée par une bague 4 réalisée en un matériau ferromagnétique tel que l'acier au carbone. La bague 4 est elle-même placée à l'intérieur d'une bobine d'induction 5 dont les spires sont constituées d'un tube en cuivre électrolytique.

. Les extrémités de la bobine d'induction 5 peuvent être connectées à une source de courant alternatif par des câbles conducteurs souples 8 ainsi qu'à un circuit de refroidissement à eau par l'intermédiaire de deux raccords bi-cônes 6 et de deux tuyaux 7 de matière souple et isolante.

L'ensemble est entouré d'un manche 9 en matière isolante en forme de tube muni à l'une de ses extrémités d'un joint 13 enserrant les tuyaux d'alimentation en eau 7 et les câbles conducteurs 8. Les divers éléments du dispositif porte-outil sont scellés en leurs places respectives à l'intérieur du manche (9) à l'aide d'une matière réfractaire (10) électriquement et thermiquement isolante.

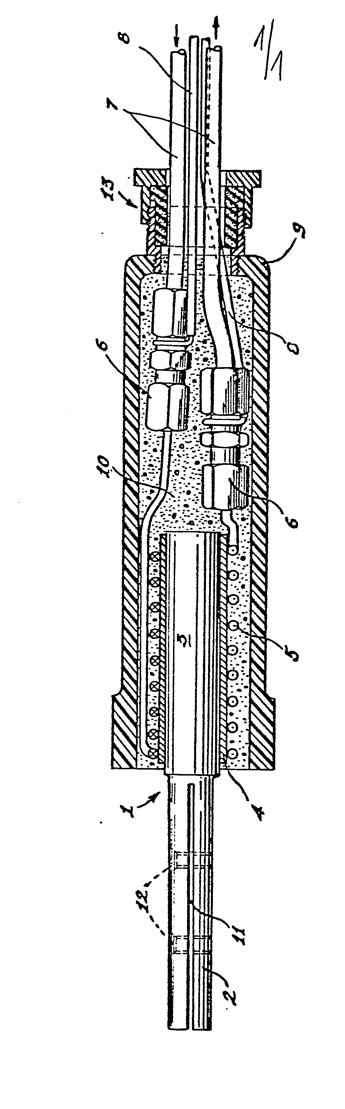

Les caractéristiques de fonctionnement du dispositif porte-outil tel que représenté à la Fig.1 sont très intéressantes et avantageuses.

En effet, lorsque la bobine d'induction 5 est alimentée en courant alternatif, la bague 4 et le noyau porte-outil 1 sont le siège de courants induits. Vu que la perméabilité magnétique du matériau ferromagnétique dont la bague 4 est formée est de loin supérieure à celle du cuivre dont le noyau porte-outil 1 est formé, les courants induits dans la bague 4 sont de loin supérieurs aux courants induits dans le noyau porte-outil 1.

En choisissant judicieusement la gamme de fréquence du courant alternatif alimentant la bobine 5, ainsi que l'épaisseur utilisée pour la bague 4, les courants induits se concentrent exclusivement dans l'épaisseur de la bague 4. Pour fixer les idées, une épaisseur de la bague de 1,5 mm et une fréquence de 25.000 Hz donnent expérimentalement d'excellents résultats.

L'échauffement de la bague 4 est en conséquence très rapide jusqu'à une température proche de la température de Curie du matériau ferromagnétique dont est formée la bague 4. A ce moment, le coefficient de per-

0063556

méabilité relative du matériau ferromagnétique chute brusquement pour tendre vers une valeur unitaire à la température de Curie; l'impédance de charge chute elle aussi brusquement, ce qui provoque une diminution sensible de l'énergie induite dans la bague 4. Il s'établit donc une autorégulation de la température de la bague 4 autour de la température correspondant au point de Curie du matériau dont la bague 4 est formée.

La bague 4 peut par exemple être réalisée en acier au carbone dont le point de Curie se situe aux environs de 760°C.

La chaleur induite dans la bague 4 est transmise au noyau porte-outil 1 par conduction thermique.

Il faut observer que la circulation d'eau au travers des spires de la bobine d'induction (5) permet non seulement de refroidir efficacement la dite bobine, mais également de limiter la température du manche 9 à une valeur acceptable pour une manipulation de l'outil à main nue.

Par l'utilisation du chauffage par induction et du refroidissement par eau, la puissance de chauffe du dispositif conforme à l'invention peut aisément atteindre plusieurs kilowatts.

Un tel dispositif porte-outil chauffant, disposant d'une puissance de chauffe élevée et d'une autorégulation de la température, permet de travailler à grande vitesse et à température constante, ce qui présente de nombreux avantages dans divers domaines d'application.

C'est le cas notamment pour le découpage à grande vitesse de matière plastique en feuille, où la déperdition calorifique de l'outil de coupe est très importante. L'utilisation d'un dispositif porte-outil conforme à l'invention permet de travailler à des vitesses nettement supérieures à celles admises pour les outils électriques conventionnels, et cela avec toutes les garanties de sécurité d'un outil électrique.

0063556

Dans le domaine de la transformation des matières thermoplastiques, le dispositif porte-outil conforme à l'invention peut avantageusement être monté sur des machines-outils automatiques de poinçonnage, découpage, matriçage, soudage, etc. Il permet d'augmenter fortement la vitesse de production tout en garantissant une qualité d'exécution constante obtenue grâce à l'autorégulation de la température de l'outil.

Le dispositif porte-outil conforme à l'invention peut encore être utilisé dans de nombreux domaines d'application, comme par exemple pour le brasage à l'étain ou au plomb, et pour tous types d'opérations de chauffe où le dispositif porte-outil est utilisé comme fer à souder de forte puissance.

Bien entendu, l'invention n'est pas limitée aux formes d'exécution qui ont été décrites et représentées à titre d'exemple non limitatif, et de nombreuses modifications peuvent y être apportées sans sortir de son cadre.

R E V E N D I C A T I O N S.

1 - Dispositif porte-outil chauffant électrique, caractérisé en ce qu'il comprend un noyau porte-outil (1) en un matériau bon conducteur de la chaleur dont une partie (3) est enserrée dans une bague (4) en matériau ferromagnétique, une bobine d'induction (5) entourant la dite bague (4), des moyens aptes à assurer la connexion des extrémités de la bobine d'induction (5) à une source d'alimentation en courant alternatif, et un manche (9) renfermant les éléments précités en laissant toutefois dépasser une partie (2) du noyau porte-outil se prolongeant au-delà de la bague (4) qui l'entoure, la bobine (5) étant apte, lorsqu'elle est reliée à une source de courant alternatif, à induire dans la bague (4) en matériau ferromagnétique des courants de Foucault provoquant un échauffement rapide de la bague (4) jusqu'à proximité de la température de Curie du matériau dont la bague (4) est formée, une autorégulation de la température s'établissant autour de cette température, et la chaleur induite dans la bague (4) étant transmise au noyau porte-outil (1) par conduction thermique.

2 - Dispositif porte-outil chauffant suivant la revendication 1, caractérisé en ce que les spires de la bobine d'induction (5) sont réalisées en cuivre.

3 - Dispositif porte-outil chauffant suivant l'une quelconque des revendications précédentes, caractérisé en ce que les spires de la bobine d'induction (5) sont constituées par un tube en un matériau bon conducteur de l'électricité, dont les extrémités sont raccordées à des tuyaux (7) par l'intermédiaire desquels le dit tube peut être connecté à une installation apte à assurer une circulation de liquide de refroidissement au travers du dit tube.

4 - Dispositif porte-outil chauffant suivant la revendication 3, caractérisé en ce que les tuyaux (7) par l'intermédiaire desquels le tube dont est constituée la bobine (5) peut être connecté à une installation apte à assurer une circulation de liquide de refroidissement au travers du dit tube sont réalisés en une matière souple et électriquement isolante.

5 - Dispositif porte-outil chauffant suivant l'une quelconque des revendications prédédentes, caractérisé en ce que l'épaisseur de la bague (4) en matériau ferromagnétique est telle que tous les courants induits par la bobine (5) lorsque celle-ci est raccordée à la source d'alimentation en courant alternatif de fréquence appropriée sont concentrés uniquement dans la bague (4).

6 - Dispositif porte-outil chauffant suivant l'une quelconque des revendications précédentes, caractérisé en ce que la bague (4) entourant le noyau porte-outil sur au moins une partie (3) de sa longueur est réalisée en acier au carbone.

7 - Dispositif porte-outil chauffant suivant l'une quelconque des revendications précédentes, caractérisé en ce que le noyau porte-outil (1) est réalisé en cuivre.

8 - Dispositif porte-outil chauffant suivant l'une quelconque des revendications précédentes, caractérisé en ce que le noyau porte-outil (1) se prolonge au-delà de la bague (4) qui l'entoure en formant à cet endroit la partie opérante de l'outil.

9 - Dispositif porte-outil chauffant suivant l'une quelconque des revendications 1 à 7, caractérisé en ce que la partie (2) du noyau porte-outil qui se prolonge au-delà de la bague (4) qui l'entoure comporte des dispositifs permettant la fixation d'un outil.

10 - Dispositif porte-outil chauffant suivant la revendication 9, caractérisé en ce que les dits dispositifs permettant la fixation d'un outil consistent en une rainure longitudinale (11) réalisée dans le noyau porte-outil (1) permettant la fixation de l'outil dans cette rainure (11) et en trous (12) taraudés dans le noyau porte-outil (1) permettant l'immobilisation de

**0063556**

l'outil par vis.

11 -- Dispositif porte-outil chauffant suivant l'une quelconque des revendications précédentes, caractérisé en ce que le manche (9) du dispositif porte-outil chauffant est réalisé en une matière électriquement isolante.

12 - Dispositif porte-outil chauffant suivant l'une quelconque des revendications précédentes, caractérisé en ce que les divers éléments du dispositif porte-outil chauffant sont scellés en leurs places respectives à l'intérieur du manche (9) à l'aide d'une matière réfractaire (10) électriquement et thermiquement isolante.

1/1

0063556

Office européen
des brevets

**RAPPORT DE RECHERCHE EUROPEENNE**

Numéro de la demande

EP 82 87 0018

## DOCUMENTS CONSIDERES COMME PERTINENTS

| Categorie | Citation du document avec indication, en cas de besoin. des parties pertinentes | Revendication concernée | CLASSEMENT DE LA DEMANDE (Int. Cl. ³) |
|---|---|---|---|
| A | US - A - 3 110 793 (G.E.C.)<br><br>* colonne 2, lignes 10 à 20; colonne 3, alinéas 3-5; colonne 4, lignes 1 à 9; figures 3-5 *<br><br>-- | 1,3,4, 11 | H 05 B 6/14<br>B 26 F 3/08 |
| A | DE - B - 1 078 318 (HARTLEIB)<br><br>* colonne 1, lignes 1 à 6, 45 à 49; colonne 2, lignes 25 à 27; figure 2 *<br><br>-- | 1,9,10 | |
| A | DE - B - 1 203 892 (VEB WAGGONBAU BAUTZEN)<br><br>* colonne 3, ligne 33 à colonne 4, ligne 8; figure 2 *<br><br>-- | 1-4,7 | DOMAINES TECHNIQUES RECHERCHES (Int. Cl. ³) |
| A | GB - A - 954 700 (FERENCZI)<br><br>* page 1, ligne 78 à page 2, ligne 6; figures 1,2 *<br><br>-- | 1,8-10 | H 05 B 6/00<br>B 23 K<br>B 26 F |
| A | CH - A - 144 064 (FREISS) | | |
| A | US - A - 2 325 585 (BLACK et al) | | |
| A | DE - B - 1 021 568 (SACHS) | | |
| A | US - A - 2 181 274 (JACKSON et al) | | |
| A | DE - B - 1 210 501 (WELLER) | | |

, Le present rapport de recherche a été établi pour toutes les revendications

| Lieu de la recherche | Date d achevement de la recherche | Examinateur |
|---|---|---|
| La Haye | 13-07-1982 | RAUSCH |